# EUROPEAN PATENT SPECIFICATION

(11) **EP 3 451 595 B1**
(45) Date of publication and mention of the grant of the patent: **13.05.2020**
(21) Application number: 17795376.7
(22) Date of filing: 12.04.2017
(51) Int. Cl.: H04L 12/703, H04L 12/723, H04L 12/721

(54) **METHOD, DEVICE AND SYSTEM FOR DATA TRANSMISSION**
VERFAHREN, VORRICHTUNG UND SYSTEM ZUR DATENÜBERTRAGUNG
PROCÉDÉ, DISPOSITIF ET SYSTÈME POUR LA TRANSMISSION DE DONNÉES

(30) Priority: 13.05.2016 CN 201610318944
(43) Date of publication of application: 06.03.2019
(73) Proprietor: Huawei Technologies Co., Ltd., Longgang District Shenzhen, Guangdong 518129 (CN)
(72) Inventor: HUANG, Jing, Shenzhen Guangdong 518129 (CN); ZHA, Min, Shenzhen Guangdong 518129 (CN)
(74) Representative: Epping - Hermann - Fischer
(86) International application number: PCT/CN2017/080314
(87) International publication number: WO 2017/193758

(56) References cited:
- WO-A1-2014/015799
- WO-A1-2015/176242
- CN-A- 1 809 031
- CN-A- 1 956 407
- CN-A- 103 532 854
- US-A1- 2007 198 900
- US-A1- 2008 022 184
- US-A1- 2009 168 780

## Description

### TECHNICAL FIELD

This application relates to the communications field, and in particular, to a data transmission method, a device, and a system.

### BACKGROUND

With development of a wireless network, for example, in the future 5G generation era, there will be an increasingly high requirement for a speed of the wireless network and an increasingly small coverage area of a single base station, and therefore a large quantity of base stations need to be deployed. To simplify a function of the base station, China Mobile proposes a cloud or centralized radio access network (Cloud or Centralized Radio Access Network, CRAN) architecture.

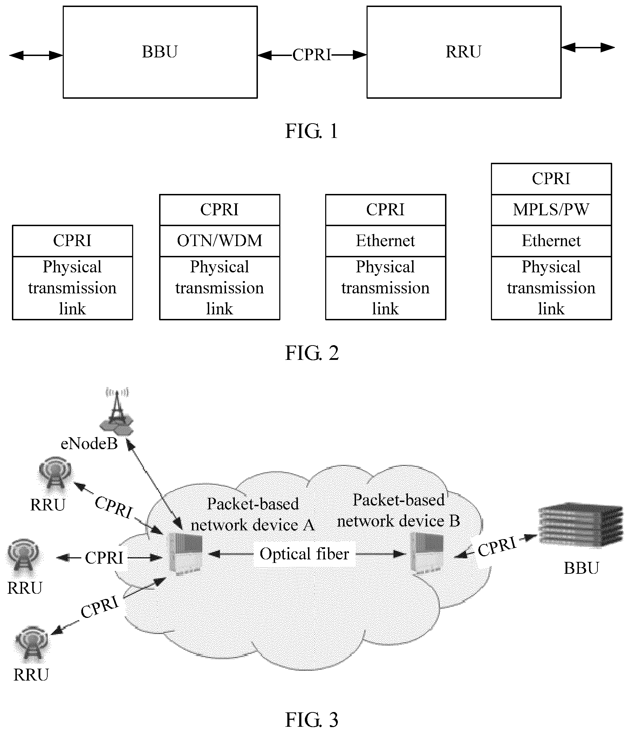

After base stations are simplified by using a CRAN, functions of a plurality of base stations are integrated into a processing system for implementation. A simplified base station is referred to as a remote radio unit (Remote Radio Unit, RRU) or a radio unit (Radio Unit, RU), and an integrated processing system may be referred to as a baseband processing unit (Baseband Unit, BBU). As shown in FIG. 1, currently there is a common public radio interface (Common Public Radio Interface, CPRI) between the RRU and the BBU in the CRAN architecture. The CPRI uses a physical layer protocol, has considerably high transmission bandwidth, and poses quite high requirements for a latency, a jitter, and frequency synchronization precision.

As shown in FIG. 2, transmission data on the CPRI in the prior art has the following several carrying manners: a physical transmission link carrying manner, an optical transport network (Optical Transport Network, OTN) or wavelength division multiplexing (Wavelength Division Multiplexing, WDM) carrying manner, a packet-based network carrying manner, and the like.

The physical transmission link carrying manner means that an RRU and a BBU are directly connected by using an optical fiber, and it costs a lot to deploy the optical fiber. The OTN or WDM carrying manner also has a problem of costs. For example, optical modules have quite high costs, and are difficult to be deployed on a large scale. Therefore, a carrying solution that is likely to be used on a large scale in the industry is the packet-based network carrying manner. The packet-based network carrying manner includes carrying data directly by using an Ethernet, or carrying data directly by using Multiprotocol Label Switching/Pseudo Wire (Multiprotocol Label Switching/Pseudo Wire, MPLS/PW), and then carrying the MPLS/PW by using the Ethernet.

However, a frame check sequence (Frame Check Sequence, FCS) in an Ethernet packet is used to perform a check on whether there is an error in the entire Ethernet packet. If there is an error in any bit in the Ethernet packet, a check result of the FCS is incorrect, and the entire Ethernet packet is discarded. For example, a payload of an Ethernet packet carries 1500 bytes of CPRI data. An error in any bit of header information or the payload of the Ethernet packet leads to discarding of the 1500 bytes of CPRI data and a relatively high packet loss rate. Data needs to be retransmitted after being discarded, and consequently a relatively high packet loss rate affects throughput efficiency.

US 2008/022184A1 discloses a method of transmitting an Ethernet frame via a network bridge, the method includes receiving a frame header from a previous node connected to the network bridge; receiving a header cyclic redundancy check (CRC) flag and header CRC with respect to the frame header from the previous node; determining whether to forward the Ethernet frame including the frame header by referring to the header CRC flag and the header CRC; and forwarding the Ethernet frame from the previous node to a next node connected to the network bridge according to the determination.

### SUMMARY

In view of this, embodiments of the present invention provide a data transmission method, a device, and a system as defined in the presently independent claims, to resolve problems of a high packet loss rate and low throughput efficiency during a data transmission process.

According to a first aspect, an embodiment of the present invention provides a data transmission method, including: receiving an Ethernet packet, where the Ethernet packet carries a first packet header check bit, and the first packet header check bit is used to perform a check on forwarding information of the Ethernet packet; performing a check on the forwarding information of the Ethernet packet based on the first packet header check bit; and determining forwarding behavior of the Ethernet packet based on a check result of the forwarding information of the Ethernet packet.

In this embodiment of the present invention, a check is performed on the forwarding information of the Ethernet packet, and the forwarding behavior of the Ethernet packet is determined based on the check result of the forwarding information of the Ethernet packet. There is no need to perform a check on each bit of the Ethernet packet, and especially, there is no need to perform a check on a payload, thereby improving check efficiency. In addition, a problem of an excessively high packet loss rate caused by a payload check error is avoided, thereby improving throughput efficiency.

In a possible implementation of the first aspect, the determining forwarding behavior of the Ethernet packet based on a check result of the forwarding information of the Ethernet packet includes: when the check result of the forwarding information of the Ethernet packet is correct, forwarding the Ethernet packet; or when the check result of the forwarding information of the Ethernet packet is incorrect, skipping forwarding the Ethernet packet.

When the check result of the forwarding information of the Ethernet packet is correct, the packet may be forwarded, so as to resolve a prior-art problem of a high packet loss rate caused by a packet loss that is generated when an error occurs in any bit in a payload of the Ethernet packet. In a possible implementation of the first aspect, when the first packet header check bit is located in a header of the Ethernet packet, the forwarding information of the Ethernet packet includes: a destination Media Access Control MAC address of the Ethernet packet. A check needs to be performed at least on the destination MAC address in the Ethernet packet. Optionally, a check may further be performed on a source MAC address, a VLAN tag, an Ethernet type, and the like. In a possible implementation of the first aspect, when the Ethernet packet carries common public radio interface CPRI data and the first packet header check bit is located in a payload of the Ethernet packet, the forwarding information of the Ethernet packet includes: a destination MAC address of the Ethernet packet and forwarding information of the CPRI data.

In a possible implementation of the first aspect, when the Ethernet packet carries CPRI data, the method further includes: wherein the Ethernet packet carries a second packet header check bit, where the second packet header check bit is used to perform a check on forwarding information of the CPRI data; performing a check on the forwarding information of the CPRI data based on the second packet header check bit; and determining forwarding behavior of the CPRI data based on a check result of the forwarding information of the CPRI data.

When the Ethernet packet carries the CPRI data, a check may further be performed on the forwarding information of the CPRI data. Optionally, it is unnecessary for each Ethernet device to perform a check on the forwarding information of the CPRI data, and this step may be performed by a device that performs decapsulation on the CPRI data. The forwarding behavior of the Ethernet packet or the CPRI data is determined based on the check result of the forwarding information of the CPRI data, thereby improving accuracy of the forwarding behavior and reducing a packet loss rate.

In a possible implementation of the first aspect, when the Ethernet packet further carries at least one Multiprotocol Label Switching MPLS label, the method further includes: performing a check on at least one label in the MPLS label based on the second packet header check bit, and determining the forwarding behavior of the Ethernet packet based on a check result of the MPLS label.

When the Ethernet packet further carries the MPLS label, a check is performed on at least one label in the MPLS label, for example, on an inner label. The forwarding behavior of the Ethernet packet is determined based on the check result of the MPLS label, thereby improving accuracy of the forwarding behavior and reducing a packet loss rate.

In a possible implementation of the first aspect, when the check result of the forwarding information of the Ethernet packet is correct, the method further includes: performing a check on each bit of the Ethernet packet based on a frame check sequence FCS check bit, or performing a check on a payload of the Ethernet packet based on an FCS check bit; and when a check result of each bit or the payload is correct, forwarding the Ethernet packet.

When the check result of the forwarding information of the Ethernet packet is incorrect, there is no need to perform an FCS check on the Ethernet packet, so that check efficiency can be improved.

According to a second aspect, an embodiment of the present invention provides a device, including: a receiving module, configured to receive an Ethernet packet, where the Ethernet packet carries a first packet header check bit, and the first packet header check bit is used to perform a check on forwarding information of the Ethernet packet; a check module, configured to perform a check on the forwarding information of the Ethernet packet based on the first packet header check bit; and a forwarding module, configured to determine forwarding behavior of the Ethernet packet based on a check result of the forwarding information of the Ethernet packet.

In this embodiment of the present invention, a check is performed on the forwarding information of the Ethernet packet, and the forwarding behavior of the Ethernet packet is determined based on the check result of the forwarding information of the Ethernet packet. There is no need to perform a check on each bit of the Ethernet packet, and especially, there is no need to perform a check on a payload, thereby improving check efficiency. In addition, a problem of an excessively high packet loss rate caused by a payload check error is avoided, thereby improving throughput efficiency.

In a possible implementation of the second aspect, the forwarding module is configured to: when the check result of the forwarding information of the Ethernet packet is correct, forward the Ethernet packet; or when the check result of the forwarding information of the Ethernet packet is incorrect, skip forwarding the Ethernet packet.

When the check result of the forwarding information is correct, the packet may be forwarded, so as to resolve a prior-art problem of a high packet loss rate caused by a packet loss that is generated when an error occurs in any bit in a payload of the Ethernet packet.

In a possible implementation of the second aspect, when the first packet header check bit is located in a header of the Ethernet packet, the forwarding information of the Ethernet packet includes: a destination Media Access Control MAC address of the Ethernet packet. A check needs to be performed at least on the destination MAC address in the Ethernet packet. Optionally, a check may further be performed on a source MAC address, a VLAN tag, an Ethernet type, and the like.

In a possible implementation of the second aspect, when the Ethernet packet carries common public radio interface CPRI data and the first packet header check bit is located in a payload of the Ethernet packet, the forwarding information of the Ethernet packet includes: a destination MAC address of the Ethernet packet and forwarding information of the CPRI data.

In a possible implementation of the second aspect, the check module is further configured to: when the Ethernet packet carries CPRI data, wherein the Ethernet packet carries a second packet header check bit, where the second packet header check bit is used to perform a check on forwarding information of the CPRI data; and perform a check on the forwarding information of the CPRI data based on the second packet header check bit; and the forwarding module is further configured to determine forwarding behavior of the CPRI data based on a check result of the forwarding information of the CPRI data.

When the Ethernet packet carries the CPRI data, a check may further be performed on the forwarding information of the CPRI data. Optionally, it is unnecessary for each Ethernet device to perform a check on the forwarding information of the CPRI data, and this step may be performed by a device that performs decapsulation on the CPRI data. The forwarding behavior of the Ethernet packet or the CPRI data is determined based on the check result of the forwarding information of the CPRI data, thereby improving accuracy of the forwarding behavior and reducing a packet loss rate.

In a possible implementation of the second aspect, the check module is further configured to: when the Ethernet packet further carries at least one Multiprotocol Label Switching MPLS label, perform a check on at least one label in the MPLS label based on the second packet header check bit; and the forwarding module is further configured to determine the forwarding behavior of the Ethernet packet based on a check result of the MPLS label.

When the Ethernet packet further carries the MPLS label, a check is performed on at least one label in the MPLS label, for example, on an inner label. The forwarding behavior of the Ethernet packet is determined based on the check result of the MPLS label, thereby improving accuracy of the forwarding behavior and reducing a packet loss rate.

In a possible implementation of the second aspect, the check module is further configured to: when the check result of the forwarding information of the Ethernet packet is correct, perform a check on each bit of the Ethernet packet based on a frame check sequence FCS check bit, or perform a check on a payload of the Ethernet packet based on an FCS check bit; and the forwarding module is further configured to: when a check result of each bit or the payload is correct, forward the Ethernet packet.

When the check result of the forwarding information of the Ethernet packet is incorrect, there is no need to perform an FCS check on the Ethernet packet, so that check efficiency can be improved.

According to a third aspect, an embodiment of the present invention provides a system, including: a first device and a second device. The first device is configured to: receive common public radio interface CPRI data, encapsulate the CPRI data into an Ethernet packet, and add a first packet header check bit to the Ethernet packet, where the first packet header check bit is used to perform a check on forwarding information of the Ethernet packet; and send the Ethernet packet. The second device is configured to: receive the Ethernet packet, and perform a check on the forwarding information of the Ethernet packet based on the first packet header check bit; decapsulate the CPRI data from the Ethernet packet based on a check result of the forwarding information of the Ethernet packet; and send the CPRI data.

In this embodiment of the present invention, a check is performed on the forwarding information of the Ethernet packet, and forwarding behavior of the Ethernet packet is determined based on the check result of the forwarding information. There is no need to perform a check on each bit of the Ethernet packet, and especially, there is no need to perform a check on a payload, thereby improving check efficiency. In addition, a problem of an excessively high packet loss rate caused by a payload check error is avoided, thereby improving throughput efficiency.

In a possible implementation of the third aspect, the second device is further configured to: perform a check on forwarding information of the CPRI data based on a second packet header check bit, and determine forwarding behavior of the CPRI data based on a check result of the forwarding information of the CPRI data, where the CPRI data carries the second packet header check bit, the Ethernet packet carries the second packet header check bit, and the second packet header check bit is used to perform a check on the forwarding information of the CPRI data.

Optionally, a check may further be performed on the forwarding information of the CPRI data based on the first packet header check bit.

In a possible implementation of the third aspect, the second device is further configured to: when the Ethernet packet further carries at least one Multiprotocol Label Switching MPLS label, perform a check on at least one label in the MPLS label based on a second packet header check bit, and determine forwarding behavior of the Ethernet packet based on a check result of the MPLS label.

According to a fourth aspect, an embodiment of the present invention provides a system, including: a first device, a third device, and at least one second device;
the first device is configured to: receive common public radio interface CPRI data, encapsulate the CPRI data into an Ethernet packet, and add a first packet header check bit to the Ethernet packet, where the first packet header check bit is used to perform a check on forwarding information of the Ethernet packet; and send the Ethernet packet; the second device is configured to: receive the Ethernet packet, and perform a check on the forwarding information of the Ethernet packet based on the first packet header check bit; and forward the Ethernet packet based on a check result of the forwarding information of the Ethernet packet; and the third device is configured to: receive the Ethernet packet, and perform a check on the forwarding information of the Ethernet packet based on the first packet header check bit; decapsulate the CPRI data from the Ethernet packet based on a check result of the forwarding information of the Ethernet packet; and send the CPRI data.

In this embodiment of the present invention, a check is performed on the forwarding information of the Ethernet packet, and forwarding behavior of the Ethernet packet is determined based on the check result of the forwarding information. There is no need to perform a check on each bit of the Ethernet packet, and especially, there is no need to perform a check on a payload, thereby improving check efficiency. In addition, a problem of an excessively high packet loss rate caused by a payload check error is avoided, thereby improving throughput efficiency.

In a possible implementation of the fourth aspect, the second device and/or the third device are/is further configured to: perform a check on forwarding information of the CPRI data based on a second packet header check bit, and determine forwarding behavior of the CPRI data based on a check result of the forwarding information of the CPRI data, where the Ethernet packet carries the second packet header check bit, and the second packet header check bit is used to perform a check on the forwarding information of the CPRI data.

Optionally, a check may further be performed on the forwarding information of the CPRI data based on the first packet header check bit.

In a possible implementation of the fourth aspect, the second device and/or the third device are/is further configured to: when the Ethernet packet further carries at least one Multiprotocol Label Switching MPLS label, perform a check on at least one label in the MPLS label based on a second packet header check bit, and determine forwarding behavior of the Ethernet packet based on a check result of the MPLS label.

According to a fifth aspect, an embodiment of the present invention provides an Ethernet device, including: a processor, a memory, and at least one network interface. The memory is configured to store a computer executable instruction, and when the Ethernet device runs, the processor executes the computer executable instruction stored in the memory, so that the Ethernet device performs the method according to any one of the first aspect or possible implementations of the first aspect.

In this embodiment of the present invention, a check is performed on the forwarding information (for example, the destination MAC address) of the Ethernet packet, and the forwarding behavior of the Ethernet packet is determined based on the check result of the forwarding information of the Ethernet packet. There is no need to perform a check on each bit of the Ethernet packet, and especially, there is no need to perform a check on a payload, thereby improving check efficiency.

In addition, a problem of an excessively high packet loss rate caused by a payload check error is avoided, thereby improving throughput efficiency.

The invention is defined by the appended claims.

### BRIEF DESCRIPTION OF DRAWINGS

To describe the technical solutions in the embodiments of the present invention or in the prior art more clearly, the following briefly describes the accompanying drawings required for describing the background and the embodiments.
FIG. 1 is a network architectural diagram of a CRAN in the prior art;
FIG. 2 is a schematic structural diagram of a carrying manner of CPRI data in the prior art;
FIG. 3 is a network architectural diagram of a packet-based network carrying CPRI data according to an embodiment of the present invention;
FIG. 4 is a schematic diagram of a networking structure of a packet-based network device according to an embodiment of the present invention;
FIG. 5 is a flowchart of a data transmission method according to an embodiment of the present invention;
FIG. 6a is a schematic diagram of a frame format of an Ethernet packet in the prior art;
FIG. 6b is a schematic diagram of a frame format of an Ethernet packet according to an embodiment of the present invention;
FIG. 7a is a schematic diagram of a frame format of an Ethernet packet in the prior art;
FIG. 7b is a schematic diagram of a frame format of an Ethernet packet according to an embodiment of the present invention;
FIG. 8a is a schematic diagram of a frame format of an Ethernet packet in the prior art;
FIG. 8b is a schematic diagram of a frame format of an Ethernet packet according to an embodiment of the present invention;
FIG. 9a shows a frame format that is of CPRI data carried on an Ethernet and that is defined in IEEE 1904.3 in the prior art;
FIG. 9b shows a frame format of CPRI data carried on an Ethernet according to an embodiment of the present invention;
FIG. 10 shows a frame format of CPRI data that is carried on an Ethernet and in MPLS/PW according to an embodiment of the present invention;
FIG. 11 is an example flowchart of data processing according to an embodiment of the present invention;
FIG. 12 is a schematic structural diagram of a device according to an embodiment of the present invention; and
FIG. 13 is a schematic structural diagram of an Ethernet device according to an embodiment of the present invention.

### DESCRIPTION OF EMBODIMENTS

To make the objectives, technical solutions, and advantages of this application clearer and more comprehensible, the following further describes this application in detail with reference to the accompanying drawings and embodiments.

The embodiments of the present invention may be applied to a packet-based network, such as an Ethernet, a Multiprotocol Label Switching (Multiprotocol Label Switching, MPLS) network, and an Internet Protocol (Internet Protocol, IP) network. The packet-based network in the embodiments of the present invention may be used to carry common public radio interface (Common Public Radio Interface, CPRI) data, but the embodiments of the present invention are not limited to an application scenario of carrying the CPRI data.

FIG. 3 is a network architectural diagram of a packet-based network carrying CPRI data according to an embodiment of the present invention. As shown in FIG. 3, some functions of a plurality of RRUs are integrated into one processing system (BBU) for implementation. A transmission distance between the plurality of RRUs and the BBU is approximately 20 km, and CPRI data transmitted between the RRU and the BBU may be carried by using a physical transmission link, for example, an optical fiber, or may be carried by using an OTN or a packet-based network. In this embodiment of the present invention, carrying CPRI data by using a packet-based network is used as an example for description. The packet-based network includes a plurality of packet-based network devices, for example, an Ethernet device, an MPLS device, an IP device, a packet transport network (Packet Transport Network, PTN) device, a switch, and a router. The plurality of packet-based network devices may be connected by using an optical fiber. For example, a plurality of RRUs access a packet-based network device A in the packet-based network, and the packet-based network device A encapsulates CPRI data sent by the RRU into a packet-based network packet. The packet-based network packet is transmitted to a packet-based network device B by using an optical fiber, and the packet-based network device B decapsulates the CPRI data from the packet-based network packet and sends the CPRI data to the BBU. Optionally, there may further be at least one packet-based network device between the packet-based network device A and the packet-based network device B. In addition to the CPRI data, the packet-based network may carry wireless network data (Long Term Evolution LTE data) of a base station (eNodeB).

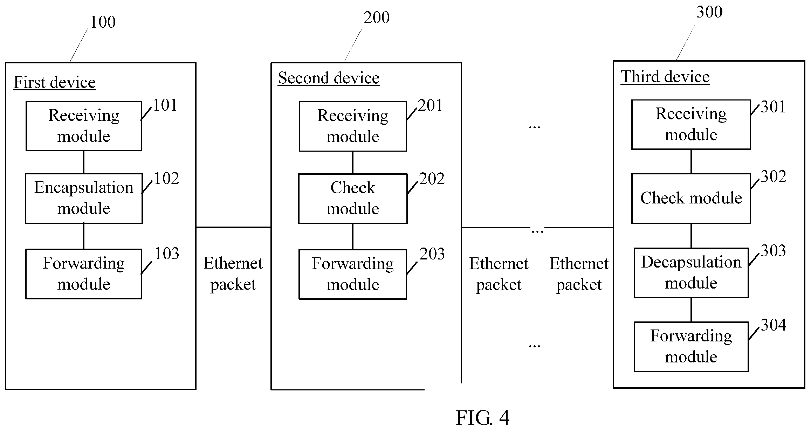

FIG. 4 is a schematic diagram of a networking structure of a packet-based network device according to an embodiment of the present invention. In this embodiment of the present invention, the packet-based network device may be an Ethernet device, an MPLS device, an IP device, a PTN device, or the like. As shown in FIG. 4, packet-based network devices in a packet-based network may include a first device 100 and a third device 300. Optionally, there may further be a plurality of second devices 200 between the first device 100 and the third device 300. The first device 100 may be a device through which an RRU accesses the packet-based network, and the third device 300 may be a device that sends CPRI data to a BBU. In this embodiment of the present invention, that the packet-based network is an Ethernet is used as an example for description.

The first device 100 implements the following functions.

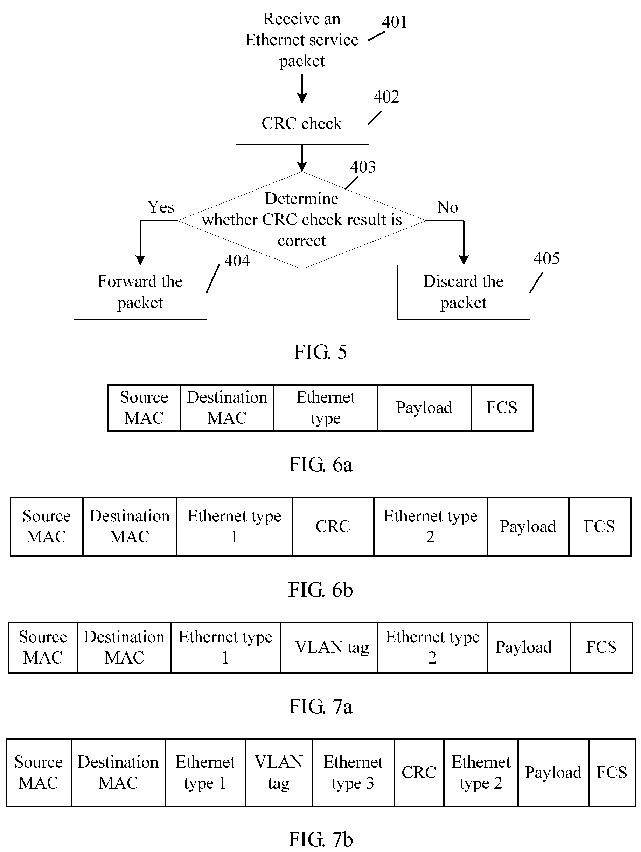

A receiving module 101 is configured to receive CPRI data from at least one RRU. An encapsulation module 102 encapsulates the received CPRI data into an Ethernet packet. For example, the CPRI data may be encapsulated into the Ethernet packet by using an encapsulation technology, for example, a virtual local area network (Virtual Local Area Network, VLAN), or a QinQ (also referred to as a Stacked VLAN or a Double VLAN). Herein, the CPRI data may be encapsulated by using a frame format of an Ethernet packet provided in the embodiments of the present invention. For the frame format for encapsulation, refer to the embodiments shown in FIG. 6b, FIG. 7b, FIG. 8b, FIG. 9b, or FIG. 10. A forwarding module 103 is configured to forward the Ethernet packet based on a destination MAC address in the Ethernet packet.

Before forwarding the Ethernet packet, the first device 100 may further add a packet header check bit, for example, a cyclic redundancy code (Cyclic Redundancy Code, CRC) check bit, to the Ethernet packet, to perform a check on forwarding information, for example, a destination Media Access Control (Media Access Control, MAC) address, of the Ethernet packet. A manner of adding the packet header check bit may be: performing a check operation on a check area covered by the packet header check bit, for example, on the forwarding information or the destination MAC address of the Ethernet packet, and adding a result of the check operation to a preset location (a packet header or a payload) of the Ethernet packet. The check operation may be a CRC operation, and specifically may be an algorithm such as a CRC16, a CRC24, or a CRC32. For example, a packet header check bit corresponding to the CRC16 occupies 16 bits.

The second device 200 implements the following functions.

A receiving module 201 is configured to receive the Ethernet packet from the first device 100. A check module 202 is configured to perform a check on forwarding information of the received Ethernet packet, for example, perform a check on the forwarding information of the Ethernet packet based on the packet header check bit, such as a CRC check bit, carried in the Ethernet packet. In this embodiment of the present invention, the forwarding information of the Ethernet packet may include the destination MAC address of the Ethernet packet. A check area covered by the CRC check bit includes at least the destination MAC address in packet header information, that is, a CRC check needs to be performed at least on the destination MAC address. Optionally, the check area covered by the CRC check bit may further include other packet header information, for example, a source MAC address, a VLAN tag, and an Ethernet type, of the Ethernet packet, but usually does not include the CRC check bit itself. The CRC operation is performed on the check area covered by the CRC check bit, and a result of the CRC operation is compared with the CRC check bit. If the two results are consistent, the check result is considered correct. A CRC operation algorithm herein used by the second device 200 is the same as that used by the first device 100. A forwarding module 203 is configured to: when a check result of the forwarding information of the Ethernet packet is correct, forward the Ethernet packet based on the forwarding information (the destination MAC address) of the Ethernet packet; or when a CRC check result is incorrect, skip forwarding or discard the Ethernet packet. Optionally, forwarding behavior of the Ethernet packet may be determined with reference to another check manner, for example, a check is performed on each bit (a packet header+a payload) of the entire Ethernet packet based on an FCS check bit, or a check is performed on a payload of the Ethernet packet based on an FCS check bit. When both results of the CRC check and an FCS check are correct, the Ethernet packet is forwarded, or when only the CRC check result is correct, the Ethernet packet can still be forwarded.

If the CPRI data is directly carried in the Ethernet packet, the destination MAC address of the Ethernet packet does not change during transmission between Ethernet devices. For example, a destination MAC address of the third device 300 is always kept unchanged. In this case, destination MAC addresses that are carried in the Ethernet packet received by the receiving module 201, the Ethernet packet checked by the check module 202, and the Ethernet packet forwarded by the forwarding module 203 are the same.

If the CPRI data is first carried in an MPLS/PW packet, and then the MPLS/PW packet is carried in the Ethernet packet, the destination MAC address and an MPLS label of the Ethernet packet change during transmission between Ethernet devices. For example, the destination MAC address that is carried in the Ethernet packet and that is received by the receiving module 201 is a MAC address of the second device 200. Destination MAC addresses that are carried in the Ethernet packet received by the receiving module 201 and the Ethernet packet checked by the check module 202 are the same. Before the forwarding module 203 forwards the Ethernet packet, the second device 200 needs to update the destination MAC address and the source MAC address in the Ethernet packet. The second device 200 separates the original destination MAC address and source MAC address from the Ethernet packet, obtains a new destination MAC address and source MAC address based on a MAC address forwarding table, and adds the new destination MAC address and source MAC address to the Ethernet packet. In addition, the second device 200 further needs to determine a new corresponding CRC check bit based on the new destination MAC address. A similar method is used for updating the MPLS label. Before the Ethernet packet is forwarded, the original MPLS label is separated (if there are two MPLS labels, an original outer MPLS label may be separated), a new MPLS label is obtained from an MPLS label forwarding table, the new MPLS label is added to an MPLS packet, and a CRC check bit corresponding to the MPLS label is updated. A CRC check bit corresponding to the destination MAC address and the CRC check bit corresponding to the MPLS label may be located in different fields. For example, the CRC check bit corresponding to the destination MAC address is located in a header of the Ethernet packet, and the CRC check bit corresponding to the MPLS label is located in the payload of the Ethernet packet. The MAC address forwarding table may be obtained by auto-learning, and the MPLS label forwarding table may be configured by using network management or configured by using a protocol.

FIG. 5 is a flowchart of a data transmission method according to an embodiment of the present invention. A second device 200 may perform method steps shown in FIG. 5.

The third device 300 implements the following functions.

A receiving module 301 is configured to receive an Ethernet packet from a first device 100 or the second device 200. A check module 302 is configured to perform a check on forwarding information of the received Ethernet packet. For a process of performing a check on the forwarding information of the Ethernet packet, refer to implementations of the check module 202. Details are not described herein again. A decapsulation module 303 is configured to decapsulate the Ethernet packet, to obtain payload data, for example, CPRI data, carried in the Ethernet packet. A prior-art decapsulation technology may be used, and a decapsulation process and an encapsulation process are mutually inverse. The forwarding module 304 is configured to: when a check result of the forwarding information of the Ethernet packet is correct, send the CPRI data obtained by the decapsulation module 303 to a BBU. Optionally, the forwarding information of the Ethernet packet includes a destination MAC address of the Ethernet packet, and may further include forwarding information of the CPRI data. When both a check result of the destination MAC address of the Ethernet packet and a check result of the forwarding information of the CPRI data are correct, the third device 300 sends the CPRI data to an RRU. In this embodiment, no strict limitation is set on an execution sequence between the check and the decapsulation. A check on the forwarding information of the Ethernet packet may be performed before decapsulation; or decapsulation may be performed before a check is performed on the forwarding information of the Ethernet packet. No limitation is set in the present invention. When the execution sequence of performing a check on the forwarding information of the Ethernet packet before decapsulation is used, and the check result of the forwarding information of the Ethernet packet is incorrect, decapsulation may not be performed, and the packet is directly discarded.

In this embodiment of the present invention, a check is performed on the forwarding information (for example, the destination MAC address) of the Ethernet packet, whether the Ethernet packet is to be forwarded is determined based on the check result of the forwarding information of the Ethernet packet, so that a packet loss rate can be reduced, thereby improving throughput efficiency. For example, when an Ethernet is used to carry the CPRI data, a packet loss rate of the CPRI data can be reduced, thereby improving CPRI data throughput efficiency.

FIG. 6a is a schematic diagram of a frame format of an Ethernet packet in the prior art. As shown in FIG. 6a, the Ethernet packet includes a source MAC address (SRCMAC), a destination MAC address (DestMAC), an Ethernet type (EtherType), a payload (Payload), and an FCS (FCS) check bit. The source MAC address and the destination MAC address are forwarding addresses of the Ethernet packet. The Ethernet type is corresponding to the payload, and the Ethernet type is used to indicate that its next field is a payload and may further indicate a payload type of the payload. The payload is data information carried in the Ethernet packet, including CPRI data, IP data, and the like. An FCS field is located at an end of the Ethernet packet, and is used to perform a check on an entire Ethernet packet. If a bit in the Ethernet packet is incorrect, a check result is incorrect, and the entire Ethernet packet is discarded.

FIG. 6b is a schematic diagram of a frame format of an Ethernet packet according to an embodiment of the present invention. On a basis of the frame format of the Ethernet packet shown in FIG. 6a, the frame format of the Ethernet packet shown in FIG. 6b is added with a packet header check bit, for example, a CRC check bit. Optionally, an Ethernet type (an Ethernet type 1) field is added before the CRC check bit, and the Ethernet type 1 is used to indicate that its next field is the CRC check bit. A check area covered by the CRC check bit includes at least a destination MAC address, that is, a CRC check needs to be performed at least on the destination MAC address. Optionally, the check area covered by the CRC check bit may further include other packet header information, for example, a source MAC address, the Ethernet type 1, and an Ethernet type 2.

FIG. 7a is a schematic diagram of a frame format of an Ethernet packet in the prior art. Compared with FIG. 6a, the Ethernet packet shown in FIG. 7a further carries a VLAN tag (VLAN TAG) and an Ethernet type (an Ethernet type 1) corresponding to the VLAN tag. The Ethernet type 1 is used to indicate that its next field is the VLAN tag, and may further indicate a type of the VLAN tag.

FIG. 7b is a schematic diagram of a frame format of an Ethernet packet according to an embodiment of the present invention. On a basis of the frame format of the Ethernet packet shown in FIG. 7a, the frame format of the Ethernet packet shown in FIG. 7b is added with a packet header check bit, for example, a CRC check bit. Optionally, an Ethernet type (an Ethernet type 3) field is added before the CRC check bit, and the Ethernet type 3 is used to indicate that its next field is the CRC check bit. A check area covered by the CRC check bit includes at least a destination MAC address, that is, a CRC check needs to be performed at least on the destination MAC address. Optionally, the check area covered by the CRC check bit may further include other packet header information, for example, a source MAC address, a VLAN tag, an Ethernet type 1, an Ethernet type 2, and the Ethernet type 3.

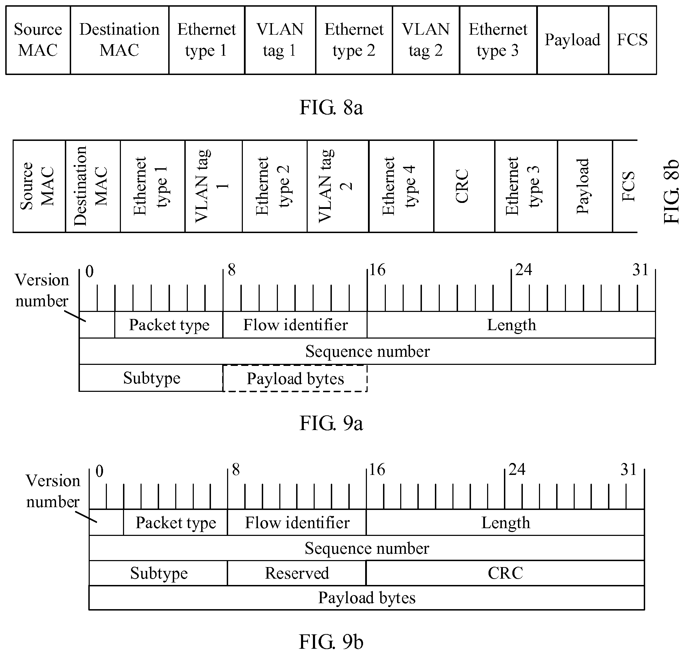

FIG. 8a is a schematic diagram of a frame format of an Ethernet packet in the prior art. Compared with FIG. 7a, the Ethernet packet shown in FIG. 8a carries two VLAN tags, that is, a VLAN tag 2 and an Ethernet type 2 corresponding to the VLAN tag 2 are added. The Ethernet type 2 is used to indicate that its next field is the VLAN tag 2, and may further indicate a type of the VLAN tag 2.

FIG. 8b is a schematic diagram of a frame format of an Ethernet packet according to an embodiment of the present invention. On a basis of the frame format of the Ethernet packet shown in FIG. 8a, the frame format of the Ethernet packet shown in FIG. 8b is added with a packet header check bit, for example, a CRC check bit. Optionally, an Ethernet type (an Ethernet type 4) field is added before the CRC check bit, and the Ethernet type 4 is used to indicate that its next field is the CRC check bit. A check area covered by the CRC check bit includes at least a destination MAC address, that is, a CRC check needs to be performed at least on the destination MAC address. Optionally, the check area covered by the CRC check bit may further include other packet header information, for example, a source MAC address, a VLAN tag, an Ethernet type 1, an Ethernet type 2, an Ethernet type 3, and the Ethernet type 4.

Optionally, to avoid impact made on packet forwarding because a device fails in identifying a new defined Ethernet type and CRC check bit, the CRC check bit may be set after other packet header information, for example, set after the source MAC address, the destination MAC address, and the VLAN tag and before an Ethernet type corresponding to a payload. Certainly, the CRC check bit may alternatively be set at any location of the Ethernet packet, and no limitation is set in the present invention.

When CPRI data is carried by using the Ethernet packet, encapsulation information of the CPRI data may further be added to the payload of the Ethernet packet. FIG. 9a shows a frame format that is of CPRI data carried on an Ethernet and that is defined in IEEE 1904.3 in the prior art. As shown in FIG. 9a, the frame format includes a version (ver) number, a packet type (pkttype), a flow identifier (flowID), a length (length), a sequence number (oderinginfo), a subtype (subtype), payload bytes (payload bytes), and the like. The encapsulation information of the CPRI data includes a field other than the payload bytes. Fields of the frame format may be in a payload of an Ethernet packet, for example, in the payload of the Ethernet packet provided in the embodiments of the present invention and shown in FIG. 6b, FIG. 7b, or FIG. 8b.

FIG. 9b shows a frame format of CPRI data carried on an Ethernet according to an embodiment of the present invention. On a basis of the frame format shown in FIG. 9a, the frame format of the CPRI data shown in FIG. 9b is added with a CRC check bit. Optionally, to make the CRC check bit align with a 32^{nd} bit, a reserved field may further be reserved. Optionally, a check area covered by the CRC check bit includes at least forwarding information (for example, a flow identifier or a timestamp) of the CPRI data, that is, a check needs to be performed at least on the forwarding information of the CPRI data. The check area covered by the CRC check bit may further include other encapsulation information of the CPRI data, that is, a check is performed on a field other than the payload bytes. However, the check area covered by the CRC check bit usually does not include the CRC check bit and the reserved field. Fields of the frame format may be in a payload of an Ethernet packet, for example, in the payload of the Ethernet packet provided in the embodiments of the present invention and shown in FIG. 6b, FIG. 7b, or FIG. 8b. Optionally, a first CRC check bit (for example, the CRC check bit shown in FIG. 6b) used to perform a check on a destination MAC address of the Ethernet packet and a second CRC check bit (for example, the CRC check bit shown in FIG. 9b) used to perform a check on the forwarding information of the CPRI data may be a same check bit or different check bits. If the first CRC check bit and the second CRC check bit are a same check bit, they may be located in a header or the payload of the Ethernet packet. If the first CRC check bit and the second CRC check bit are different check bits, the first CRC check bit may be located in a header of the Ethernet packet, and the second CRC check bit may be located in the payload of the Ethernet packet.

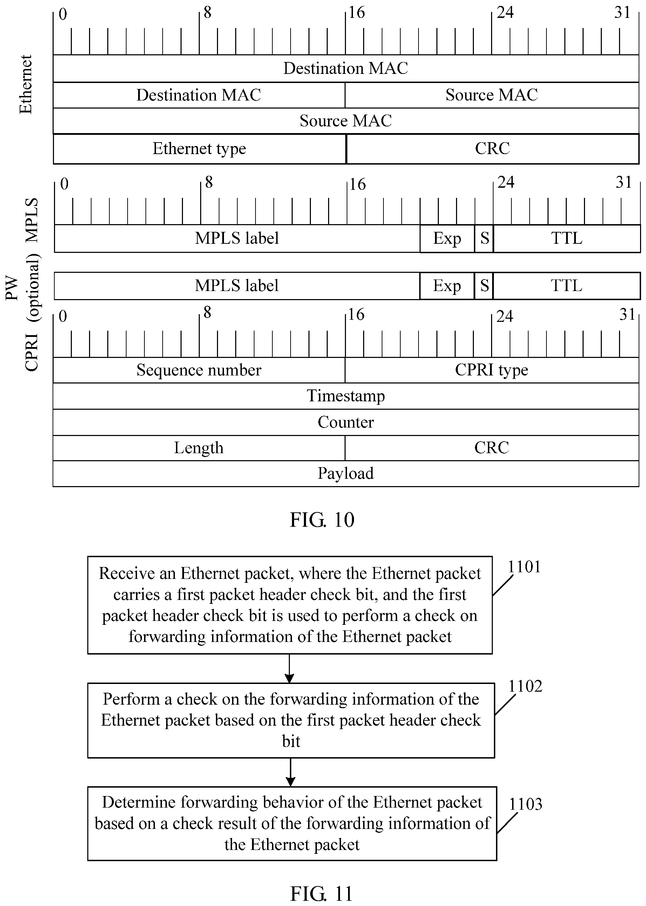

The CPRI data may alternatively be directly carried in an MPLS/PW packet, and then the MPLS/PW packet is carried in the Ethernet packet. Such a carrying manner may be applicable to a scenario with a relatively high QoS requirement. FIG. 10 shows a frame format of CPRI data that is carried on an Ethernet and in MPLS/PW according to an embodiment of the present invention. As shown in FIG. 10, the frame format includes three layers: an Ethernet layer, an MPLS/PW layer, and a CPRI layer. The Ethernet layer includes a source MAC address, a destination MAC address, and an Ethernet type, and may further include a first CRC check bit used to perform a check on a destination MAC address (or packet header information) of an Ethernet packet. The MPLS/PW layer includes an MPLS label. Optionally, two MPLS labels may be used. The CPRI layer includes a sequence number, a CPRI type, a timestamp, a counter, a length, and a payload, and may further include a second CRC check bit used to perform a check on the MPLS label and forwarding information (or encapsulation information) of the CPRI data. A coverage area of the second CRC check bit may include the forwarding information (or the encapsulation information) of the CPRI data, and may further include at least one label in the MPLS/PW. Usually, an inner (PW) MPLS label needs to be covered. It should be noted that the frame format at the CPRI layer in FIG. 10 is merely an example, and another frame format such as the frame format shown in FIG. 9b may alternatively be used. The frame format at the Ethernet layer in FIG. 10 may also use the frame format shown in FIG. 6b, FIG. 7b, or FIG. 8b. The "packet header information of the Ethernet packet" described in this embodiment of the present invention may be a field before the payload of the Ethernet packet, and usually does not include a check bit (for example, a CRC). The "encapsulation information of the CPRI data" may be a field before the payload of the CPRI data, and usually does not include a check bit (for example, a CRC), a reserved field, and the like. The "header information of the Ethernet packet" is information carried in the "header of the Ethernet packet". For example, in FIG. 6b, the packet header information of the Ethernet packet includes: the source MAC address, the destination MAC address, the Ethernet type 1, and the Ethernet type 2, but the covered check area usually does not include the CRC. In FIG. 9b, the encapsulation information of the CPRI data includes a field other than the payload bytes, but the covered check area usually does not include the CRC. In this embodiment of the present invention, the "covered check area" is a field on which a check needs to be performed by using a check bit.

FIG. 11 is an example flowchart of data processing according to an embodiment of the present invention. As shown in FIG. 11, method steps in this embodiment may be performed by an Ethernet device, for example, the first device, the second device, or the third device in FIG. 4, and include the following steps.

S1101: Receive an Ethernet packet, where the Ethernet packet carries a first packet header check bit, and the first packet header check bit is used to perform a check on forwarding information of the Ethernet packet.

The Ethernet device may receive an Ethernet packet from at least one RRU or another Ethernet device. For a frame format of the Ethernet packet in this embodiment of the present invention, refer to the foregoing embodiments, for example, the embodiments shown in FIG. 6b, FIG. 7b, and FIG. 8b. The first packet header check bit, for example, a CRC check bit, carried in the Ethernet packet is used to perform a check on the forwarding information, for example, a destination MAC address, of the Ethernet packet.

S1102: Perform a check on the forwarding information of the Ethernet packet based on the first packet header check bit.

In this embodiment of the present invention, the Ethernet packet may carry only one first packet header check bit (a CRC check bit), where the first packet header check bit may be located in a header of the Ethernet packet, or located in a payload of the Ethernet packet.

Referring to FIG. 6b, FIG. 7b, and FIG. 8b, when the first packet header check bit is located in the header of the Ethernet packet, the forwarding information of the Ethernet packet includes: the destination MAC address of the Ethernet packet. Optionally, a check may further be performed on other packet header information, for example, a source MAC address, an Ethernet type, and a VLAN tag, of the Ethernet packet based on the first packet header check bit.

When the Ethernet packet carries other service data, referring to FIG. 9b, for example, when the payload of the Ethernet packet carries CPRI data and the first packet header check bit is located in the payload of the Ethernet packet, the forwarding information of the Ethernet packet includes: the destination MAC address of the Ethernet packet and forwarding information of the CPRI data. Optionally, a check may further be performed on other packet header information, for example, a source MAC address, an Ethernet type, and a VLAN tag, of the Ethernet packet based on the first packet header check bit. A check may further be performed on other encapsulation information of the CPRI data based on the first packet header check bit.

Optionally, the Ethernet packet may carry both the first packet header check bit and a second packet header check bit. A check may be performed on the destination MAC address of the Ethernet packet or the packet header information of the Ethernet packet based on the first packet header check bit, and a check may further be performed on the forwarding information of the CPRI data or the encapsulation information of the CPRI data based on the second packet header check bit. The first packet header check bit and the second packet header check bit may be CRC check bits. The first packet header check bit and the second packet header check bit may be located in different fields, for example, the first packet header check bit is located in the packet header of the Ethernet packet, and the second packet header check bit is located in the payload of the Ethernet packet.

Optionally, referring to the embodiment shown in FIG. 10, when the Ethernet packet further carries at least one MPLS label, a check may be performed on at least one label in the MPLS label, for example, an MPLS label of a PW based on the second packet header check bit.

S1103: Determine forwarding behavior of the Ethernet packet based on a check result of the forwarding information of the Ethernet packet.

When the check result of the forwarding information of the Ethernet packet is correct, the Ethernet packet is forwarded; or when the check result of the forwarding information of the Ethernet packet is incorrect, the Ethernet packet is not forwarded or is discarded. For example, whether the Ethernet packet needs to be forwarded may be determined based on a check result of the destination MAC address of the Ethernet packet or a check result of the packet header information of the Ethernet packet. Optionally, if the Ethernet packet carries the CPRI data, whether the Ethernet packet needs to be forwarded may further be determined based on a check result of the forwarding information of the CPRI data or a check result of the encapsulation information of the CPRI data. Optionally, if the Ethernet packet further carries at least one MPLS label, whether the Ethernet packet needs to be forwarded may further be determined with reference to a check result of the MPLS label. Optionally, when the forwarding information of the Ethernet packet is correct, a check may further be performed on each bit or the payload of the Ethernet packet based on an FCS check bit; and when a check result of each bit or the payload is correct, the Ethernet packet is forwarded.

A forwarding mode of the Ethernet device includes a store-and-forward mode and a cut-through (cut-through) forwarding mode. For the store-and-forward mode, if an FCS check of the Ethernet packet fails but a check on the forwarding information of the Ethernet packet is correct, it indicates that a bit in which an error occurs is not in the packet header, and then the packet can still be forwarded. However, if a check on the forwarding information of the Ethernet packet fails, the packet needs to be discarded. In the cut-through (cut-through) forwarding mode, the forwarding behavior of the packet cannot depend on the FCS check. Cut-through forwarding means that forwarding behavior of a packet begins to be determined after a particular length (for example, 20 bytes or 40 bytes) of the packet is received but not after an entire packet is received. This forwarding mode can reduce a latency. However, forwarding is started before an FCS check is performed on the packet. If an error is subsequently found in the FCS check, the packet cannot be discarded. Therefore, in the cut-through forwarding mode, a check is performed on the forwarding information by using the CRC check bit, and the check can be completed before the packet is forwarded, thereby improving check efficiency and accuracy of the forwarding behavior.

In this embodiment of the present invention, the Ethernet device uses a packet header check bit to perform a check on the forwarding information of the Ethernet packet, so that check efficiency can be improved. When the forwarding information is correct, the Ethernet packet may be forwarded, so as to resolve a prior-art problem of a high packet loss rate caused by a packet loss that is generated when an error occurs in any bit in a payload of the Ethernet packet, thereby improving throughput efficiency of data transmission.

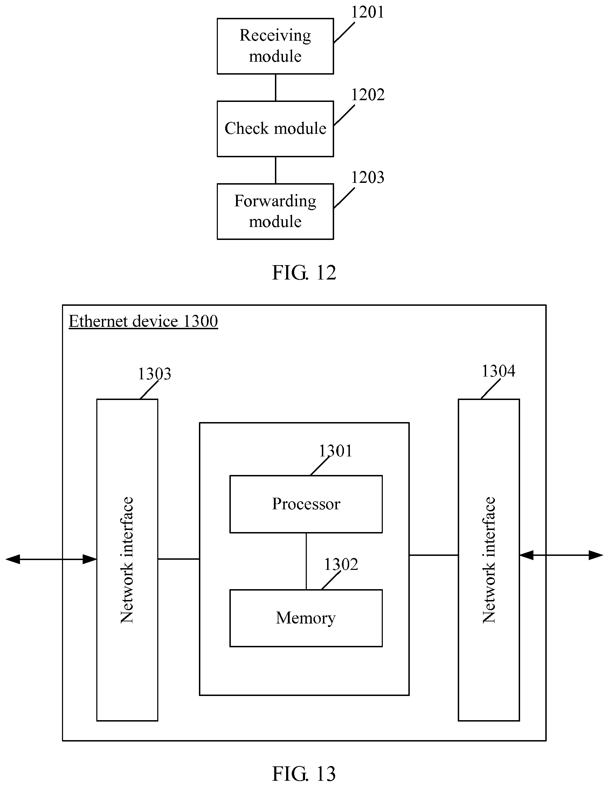

FIG. 12 is a schematic structural diagram of a device according to an embodiment of the present invention. As shown in FIG. 12, the device may be an Ethernet device, for example, the first device, the second device, or the third device in FIG. 4. The device includes the following function modules.

A receiving module 1201 is configured to receive an Ethernet packet, where the Ethernet packet carries a first packet header check bit, and the first packet header check bit is used to perform a check on forwarding information of the Ethernet packet.

The receiving module 1201 may receive an Ethernet packet from at least one RRU or another Ethernet device. For a frame format of the Ethernet packet in this embodiment of the present invention, refer to the foregoing embodiments, for example, the embodiments shown in FIG. 6b,

FIG. 7b, and FIG. 8b. The first packet header check bit, for example, a CRC check bit, carried in the Ethernet packet is used to perform a check on the forwarding information, for example, a destination MAC address, of the Ethernet packet.

A check module 1202 is configured to perform a check on the forwarding information of the Ethernet packet based on the first packet header check bit.

In this embodiment of the present invention, the Ethernet packet may carry only one first packet header check bit (a CRC check bit), where the first packet header check bit may be located in a header of the Ethernet packet, or located in a payload of the Ethernet packet.

Referring to FIG. 6b, FIG. 7b, and FIG. 8b, when the first packet header check bit is located in the header of the Ethernet packet, the forwarding information of the Ethernet packet includes: the destination MAC address of the Ethernet packet. The check module 1202 may further perform a check on other packet header information, for example, a source MAC address, an Ethernet type, and a VLAN tag, of the Ethernet packet based on the first packet header check bit.

When the Ethernet packet carries other service data, referring to FIG. 9b, for example, when the payload of the Ethernet packet carries CPRI data and the first packet header check bit is located in the payload of the Ethernet packet, the forwarding information of the Ethernet packet includes: the destination MAC address of the Ethernet packet and forwarding information of the CPRI data. Optionally, the check module 1202 may further perform a check on other packet header information, for example, a source MAC address, an Ethernet type, and a VLAN tag, of the Ethernet packet based on the first packet header check bit. The check module 1202 may further perform a check on other encapsulation information of the CPRI data based on the first packet header check bit.

Optionally, the Ethernet packet may carry both the first packet header check bit and a second packet header check bit. The check module 1202 may perform a check on the destination MAC address of the Ethernet packet or the packet header information of the Ethernet packet based on the first packet header check bit, and may further perform a check on the forwarding information of the CPRI data or the encapsulation information of the CPRI data based on the second packet header check bit. The first packet header check bit and the second packet header check bit may be CRC check bits. The first packet header check bit and the second packet header check bit may be located in different fields, for example, the first packet header check bit is located in the packet header of the Ethernet packet, and the second packet header check bit is located in the payload of the Ethernet packet.

Optionally, referring to the embodiment shown in FIG. 10, when the Ethernet packet further carries at least one MPLS label, the check module 1202 may perform a check on at least one label in the MPLS label, for example, an MPLS label of a PW based on the second packet header check bit.

A forwarding module 1203 is configured to determine forwarding behavior of the Ethernet packet based on a check result of the forwarding information of the Ethernet packet.

When the check result of the forwarding information of the Ethernet packet is correct, the forwarding module 1203 forwards the Ethernet packet; or when the check result of the forwarding information of the Ethernet packet is incorrect, the forwarding module 1203 skips forwarding or discards the Ethernet packet. For example, whether the Ethernet packet needs to be forwarded may be determined based on a check result of the destination MAC address of the Ethernet packet or a check result of the packet header information of the Ethernet packet. Optionally, if the Ethernet packet carries the CPRI data, the forwarding module 1203 may determine, based on a check result of the forwarding information of the CPRI data or a check result of the encapsulation information of the CPRI data, whether the Ethernet packet needs to be forwarded. Optionally, if the Ethernet packet further carries at least one MPLS label, the forwarding module 1203 may further determine, with reference to a check result of the MPLS label, whether the Ethernet packet needs to be forwarded. Optionally, when the forwarding information of the Ethernet packet is correct, a check may further be performed on each bit or the payload of the Ethernet packet based on an FCS check bit; and when a check result of each bit or the payload is correct, the forwarding module 1203 forwards the Ethernet packet.

In this embodiment of the present invention, the Ethernet device uses a packet header check bit to perform a check on the forwarding information of the Ethernet packet, so that check efficiency can be improved. When the forwarding information of the Ethernet packet is correct, the Ethernet packet may be forwarded, so as to resolve a prior-art problem of a high packet loss rate caused by a packet loss that is generated when an error occurs in any bit in a payload of the Ethernet packet, thereby improving throughput efficiency of data transmission.

FIG. 13 is a schematic structural diagram of an Ethernet device according to an embodiment of the present invention. As shown in FIG. 13, an Ethernet device 1300 includes: a processor 1301, a memory 1302, and at least one network interface, for example, a network interface 1303 and a network interface 1304.

The processor 1301 may execute a related program by using a general purpose central processing unit (Central Processing Unit, CPU), a microprocessor, an application-specific integrated circuit (Application Specific Integrated Circuit, ASIC), or at least one integrated circuit, to implement the technical solutions provided in this embodiment of the present invention.

The memory 1302 may be a read-only memory (Read Only Memory, ROM), a static storage device, a dynamic storage device, or a random-access memory (Random Access Memory, RAM). The memory 1302 may store an operating system and other application programs. When the technical solutions provided in this embodiment of the present invention are implemented software or firmware, program code used to implement the technical solutions provided in this embodiment of the present invention is stored in the memory 1302, and is executed by the processor 1301.

The network interfaces 1303 and 1304 use, for example but not limited to, a transceiver-type apparatus, to implement communication between the Ethernet device 1300 and another device or between the Ethernet device 1300 and a communications network. For example, the network interface 1303 may receive CPRI data from at least one RRU, or send CPRI data to at least one RRU. The network interface 1304 may receive an Ethernet packet from another Ethernet device, or send an Ethernet packet to another Ethernet device. Herein, division of the network interfaces 1303 and 1304 is merely logical division, and in an actual product, the network interfaces 1303 and 1304 may be implemented by using a same physical interface.

The Ethernet device 1300 receives an Ethernet packet by using the network interface 1303 or 1304, where the Ethernet packet carries a first packet header check bit, and the first packet header check bit is used to perform a check on forwarding information of the Ethernet packet. A network controller executes, by using the processor 1301, the code stored in the memory 1302, so as to perform a check on the forwarding information of the Ethernet packet based on the first packet header check bit, and to determine forwarding behavior of the Ethernet packet based on a check result of the forwarding information of the Ethernet packet.

When the check result of the forwarding information of the Ethernet packet is correct, the network interface 1303 or 1304 forwards the Ethernet packet; or when the check result of the forwarding information of the Ethernet packet is incorrect, the network interface 1303 or 1304 skips forwarding or discards the Ethernet packet.

Specifically, the Ethernet device 1300 shown in FIG. 13 may implement the technical solutions of any embodiment in the present invention. It should be noted that, although the Ethernet device 1300 shown in FIG. 13 merely shows the processor 1301, the memory 1302, and the network interfaces 1303 and 1304, during a specific implementation process, a person skilled in the art should understand that the Ethernet device 1300 further includes another device necessary for normal running. In addition, based on a specific requirement, a person skilled in the art should understand that the Ethernet device 1300 may further include a hardware device that implements additional functions. For example, the Ethernet device 1300 further includes a power supply, a fan, a clock unit, a main control unit, and the like. Moreover, a person skilled in the art should understand that the Ethernet device 1300 may alternatively include only devices necessary for implementing this embodiment of the present invention, and does not necessarily include all the devices shown in FIG. 13.

In this embodiment of the present invention, the Ethernet device uses a packet header check bit to perform a check on the forwarding information, so that check efficiency can be improved. When the forwarding information is correct, the Ethernet packet may be forwarded, so as to resolve a prior-art problem of a high packet loss rate caused by a packet loss that is generated when an error occurs in any bit in a payload of the Ethernet packet, thereby improving throughput efficiency of data transmission.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A data transmission method, wherein the method comprises:
receiving an Ethernet packet (1101), wherein the Ethernet packet carries a first packet header check bit, and the first packet header check bit is used to perform a check on forwarding information of the Ethernet packet, wherein the first packet header check bit is located in a header of the Ethernet packet, the forwarding information of the Ethernet packet comprises: a destination Media Access Control, MAC, address of the Ethernet packet, wherein the Ethernet packet carries CPRI data, the Ethernet packet carries a second packet header check bit, the second packet header check bit is used to perform a check on forwarding information of the CPRI data;
performing a check on the forwarding information of the Ethernet packet based on the first packet header check bit (1102);
determining forwarding behavior of the Ethernet packet based on a check result of the forwarding information of the Ethernet packet (1103);
performing a check on the forwarding information of the CPRI data based on the second packet header check bit; and
determining forwarding behavior of the CPRI data based on a check result of the forwarding information of the CPRI data.

2. The method according to claim 1, wherein the determining forwarding behavior of the Ethernet packet based on a check result of the forwarding information of the Ethernet packet comprises:
when the check result of the forwarding information of the Ethernet packet is correct, forwarding the Ethernet packet; or
when the check result of the forwarding information of the Ethernet packet is incorrect, skipping forwarding the Ethernet packet.

3. The method according to claim 1, wherein when the Ethernet packet further carries at least one Multiprotocol Label Switching, MPLS, label, the method further comprises:
performing a check on at least one label in the MPLS label based on the second packet header check bit; and
determining the forwarding behavior of the Ethernet packet based on a check result of the MPLS label.

4. The method according to claim 2, wherein when the check result of the forwarding information of the Ethernet packet is correct, the method further comprises:
performing a check on each bit of the Ethernet packet based on a frame check sequence, FCS, check bit, or performing a check on a payload of the Ethernet packet based on an FCS check bit; and
when a check result of each bit or the payload is correct, forwarding the Ethernet packet.

5. A device, wherein the device comprises:
a receiving module (1201), configured to receive an Ethernet packet, wherein the Ethernet packet carries a first packet header check bit, and the first packet header check bit is used to perform a check on forwarding information of the Ethernet packet, wherein the first packet header check bit is located in a header of the Ethernet packet, the forwarding information of the Ethernet packet comprises: a destination Media Access Control, MAC, address of the Ethernet packet, wherein the Ethernet packet carries CPRI data, the Ethernet packet carries a second packet header check bit, the second packet header check bit is used to perform a check on forwarding information of the CPRI data;
a check module (1202), configured to perform a check on the forwarding information of the Ethernet packet based on the first packet header check bit, perform a check on the forwarding information of the CPRI data based on the second packet header check bit; and
a forwarding module (1203), configured to determine forwarding behavior of the Ethernet packet based on a check result of the forwarding information of the Ethernet packet, determine forwarding behavior of the CPRI data based on a check result of the forwarding information of the CPRI data.

6. The device according to claim 5, wherein the forwarding module is configured to:
when the check result of the forwarding information of the Ethernet packet is correct, forward the Ethernet packet; or
when the check result of the forwarding information of the Ethernet packet is incorrect, skip forwarding the Ethernet packet.

7. The device according to claim 5, wherein the check module is further configured to:
when the Ethernet packet further carries at least one Multiprotocol Label Switching, MPLS, label, perform a check on at least one label in the MPLS label based on the second packet header check bit; and
the forwarding module is further configured to determine the forwarding behavior of the Ethernet packet based on a check result of the MPLS label.

8. The device according to claim 6, wherein the check module is further configured to:
when the check result of the forwarding information of the Ethernet packet is correct, perform a check on each bit of the Ethernet packet based on a frame check sequence, FCS, check bit, or perform a check on a payload of the Ethernet packet based on an FCS check bit; and
the forwarding module is further configured to: when a check result of each bit or the payload is correct, forward the Ethernet packet.

9. A system, wherein the system comprises: a first device (100), a third device (300), and at least one second device (200);
the first device is configured to: receive common public radio interface, CPRI, data, encapsulate the CPRI data into an Ethernet packet, and add a first packet header check bit to the Ethernet packet, wherein the first packet header check bit is used to perform a check on forwarding information of the Ethernet packet, the Ethernet packet carries a second packet header check bit, and the second packet header check bit is used to perform a check on the forwarding information of the CPRI data; and send the Ethernet packet;
the second device is configured to: receive the Ethernet packet, and perform a check on the forwarding information of the Ethernet packet based on the first packet header check bit; and forward the Ethernet packet based on a check result of the forwarding information of the Ethernet packet, perform a check on forwarding information of the CPRI data based on the second packet header check bit, and determine forwarding behavior of the CPRI data based on a check result of the forwarding information of the CPRI data; and
the third device is configured to: receive the Ethernet packet, and perform a check on the forwarding information of the Ethernet packet based on the first packet header check bit; decapsulate the CPRI data from the Ethernet packet based on a check result of the forwarding information of the Ethernet packet; and send the CPRI data.

## Patentansprüche

1. Datenübertragungsverfahren, wobei das Verfahren Folgendes umfasst:
Empfangen eines Ethernet-Pakets (1101), wobei das Ethernet-Paket ein erstes Paketkopf-Prüfbit transportiert und das erste Paketkopf-Prüfbit dazu genutzt wird, um eine Prüfung an Informationen zur Weiterleitung des Ethernet-Pakets durchzuführen, wobei sich das erste Paketkopf-Prüfbit in einem Kopf des Ethernet-Pakets befindet und die Informationen zur Weiterleitung des Ethernet-Pakets Folgendes umfassen: eine Ziel-MAC-Adresse (MAC = "Media Access Control") des Ethernet-Pakets, wobei das Ethernet-Paket CPRI-Daten transportiert, das Ethernet-Paket ein zweites Paketkopf-Prüfbit transportiert und das zweite Paketkopf-Prüfbit dazu genutzt wird, um eine Prüfung an Informationen zur Weiterleitung der CPRI-Daten durchzuführen;
Durchführen einer Prüfung an den Informationen zur Weiterleitung des Ethernet-Pakets basierend auf dem ersten Paketkopf-Prüfbit (1102);
Ermitteln eines Verhaltens der Weiterleitung des Ethernet-Pakets basierend auf einem Ergebnis der Prüfung der Informationen zur Weiterleitung des Ethernet-Pakets (1103);
Durchführen einer Prüfung an den Informationen zur Weiterleitung der CPRI-Daten basierend auf dem zweiten Paketkopf-Prüfbit; und
Ermitteln eines Verhaltens der Weiterleitung der CPRI-Daten basierend auf einem Ergebnis der Prüfung der Informationen zur Weiterleitung der CPRI-Daten.

2. Verfahren nach Anspruch 1, wobei das Ermitteln eines Verhaltens der Weiterleitung des Ethernet-Pakets basierend auf einem Ergebnis der Prüfung der Informationen zur Weiterleitung des Ethernet-Pakets Folgendes umfasst:
wenn das Ergebnis der Prüfung der Informationen zur Weiterleitung des Ethernet-Pakets korrekt ist, Weiterleiten des Ethernet-Pakets; oder,
wenn das Ergebnis der Prüfung der Informationen zur Weiterleitung des Ethernet-Pakets inkorrekt ist, Nichtweiterleiten des Ethernet-Pakets.

3. Verfahren nach Anspruch 1, wobei das Verfahren, wenn das Ethernet-Paket ferner mindestens ein MPLS-Label (MPLS = "Multiprotocol Label Switching") transportiert, ferner Folgendes umfasst:
Durchführen einer Prüfung an mindestens einem Label im MPLS-Label basierend auf dem zweiten Paketkopf-Prüfbit; und
Ermitteln des Verhaltens der Weiterleitung des Ethernet-Pakets basierend auf einem Ergebnis der Prüfung des MPLS-Labels.

4. Verfahren nach Anspruch 2, wobei das Verfahren, wenn das Ergebnis der Prüfung der Informationen zur Weiterleitung des Ethernet-Pakets korrekt ist, ferner Folgendes umfasst:
Durchführen einer Prüfung an jedem Bit des Ethernet-Pakets basierend auf einem FCS-Prüfbit (FCS = "Frame Check Sequence") oder Durchführen einer Prüfung an Nutzdaten des Ethernet-Pakets basierend auf einem FCS-Prüfbit; und,
wenn ein Ergebnis der Prüfung jedes Bits oder der Nutzdaten korrekt ist, Weiterleiten des Ethernet-Pakets.

5. Gerät, wobei das Gerät Folgendes umfasst:
ein Empfangsmodul (1201), das konfiguriert ist, um ein Ethernet-Paket zu empfangen, wobei das Ethernet-Paket ein erstes Paketkopf-Prüfbit transportiert und das erste Paketkopf-Prüfbit dazu genutzt wird, um eine Prüfung an Informationen zur Weiterleitung des Ethernet-Pakets durchzuführen, wobei sich das erste Paketkopf-Prüfbit in einem Kopf des Ethernet-Pakets befindet und die Informationen zur Weiterleitung des Ethernet-Pakets Folgendes umfassen: eine Ziel-MAC-Adresse (MAC = "Media Access Control") des Ethernet-Pakets, wobei das Ethernet-Paket CPRI-Daten transportiert, das Ethernet-Paket ein zweites Paketkopf-Prüfbit transportiert und das zweite Paketkopf-Prüfbit dazu genutzt wird, um eine Prüfung an Informationen zur Weiterleitung der CPRI-Daten durchzuführen;
ein Prüfmodul (1202), das konfiguriert ist, um eine Prüfung an den Informationen zur Weiterleitung des Ethernet-Pakets basierend auf dem ersten Paketkopf-Prüfbit durchzuführen und eine Prüfung an den Informationen zur Weiterleitung der CPRI-Daten basierend auf dem zweiten Paketkopf-Prüfbit durchzuführen; und
ein Weiterleitungsmodul (1203), das konfiguriert ist, um ein Verhalten der Weiterleitung des Ethernet-Pakets basierend auf einem Ergebnis der Prüfung der Informationen zur Weiterleitung des Ethernet-Pakets zu ermitteln und ein Verhalten der Weiterleitung der CPRI-Daten basierend auf einem Ergebnis der Prüfung der Informationen zur Weiterleitung der CPRI-Daten zu ermitteln.

6. Gerät nach Anspruch 5, wobei das Weiterleitungsmodul für Folgendes konfiguriert ist:
wenn das Ergebnis der Prüfung der Informationen zur Weiterleitung des Ethernet-Pakets korrekt ist, Weiterleiten des Ethernet-Pakets; oder,
wenn das Ergebnis der Prüfung der Informationen zur Weiterleitung des Ethernet-Pakets inkorrekt ist, Nichtweiterleiten des Ethernet-Pakets.

7. Gerät nach Anspruch 5, wobei das Prüfmodul ferner für Folgendes konfiguriert ist:
wenn das Ethernet-Paket ferner mindestens ein MPLS-Label (MPLS = "Multiprotocol Label Switching") transportiert, Durchführen einer Prüfung an mindestens einem Label im MPLS-Label basierend auf dem zweiten Paketkopf-Prüfbit; und
das Weiterleitungsmodul ferner konfiguriert ist, um das Verhalten der Weiterleitung des Ethernet-Pakets basierend auf einem Ergebnis der Prüfung des MPLS-Labels zu ermitteln.

8. Gerät nach Anspruch 6, wobei das Prüfmodul ferner für Folgendes konfiguriert ist:
wenn das Ergebnis der Prüfung der Informationen zur Weiterleitung des Ethernet-Pakets korrekt ist, Durchführen einer Prüfung an jedem Bit des Ethernet-Pakets basierend auf einem FCS-Prüfbit (FCS = "Frame Check Sequence") oder Durchführen einer Prüfung an Nutzdaten des Ethernet-Pakets basierend auf einem FCS-Prüfbit; und
das Weiterleitungsmodul ferner für Folgendes konfiguriert ist: wenn ein Ergebnis der Prüfung jedes Bits oder der Nutzdaten korrekt ist, Weiterleiten des Ethernet-Pakets.

9. System, wobei das System Folgendes umfasst: ein erstes Gerät (100), ein drittes Gerät (300) und mindestens ein zweites Gerät (200);
das erste Gerät für Folgendes konfiguriert ist: Empfangen von CPRI-Daten (CPRI = "Common Public Radio Interface"), Einpacken der CPRI-Daten in ein Ethernet-Paket und Hinzufügen eines ersten Paketkopf-Prüfbits zum Ethernet-Paket, wobei das erste Paketkopf-Prüfbit dazu genutzt wird, um eine Prüfung an Informationen zur Weiterleitung des Ethernet-Pakets durchzuführen, das Ethernet-Paket ein zweites Paketkopf-Prüfbit transportiert und das zweite Paketkopf-Prüfbit dazu genutzt wird, um eine Prüfung an den Informationen zur Weiterleitung der CPRI-Daten durchzuführen; und Senden des Ethernet-Pakets;
das zweite Gerät für Folgendes konfiguriert ist: Empfangen des Ethernet-Pakets und Durchführen einer Prüfung an den Informationen zur Weiterleitung des Ethernet-Pakets basierend auf dem ersten Paketkopf-Prüfbit; und Weiterleiten des Ethernet-Pakets basierend auf einem Ergebnis der Prüfung der Informationen zur Weiterleitung des Ethernet-Pakets, Durchführen einer Prüfung an Informationen zur Weiterleitung der CPRI-Daten basierend auf dem zweiten Paketkopf-Prüfbit und Ermitteln eines Verhaltens der Weiterleitung der CPRI-Daten basierend auf einem Ergebnis der Prüfung der Informationen zur Weiterleitung der CPRI-Daten; und
das dritte Gerät für Folgendes konfiguriert ist: Empfangen des Ethernet-Pakets und Durchführen einer Prüfung an den Informationen zur Weiterleitung des Ethernet-Pakets basierend auf dem ersten Paketkopf-Prüfbit; Auspacken der CPRI-Daten aus dem Ethernet-Paket basierend auf einem Ergebnis der Prüfung der Informationen zur Weiterleitung des Ethernet-Pakets; und Senden der CPRI-Daten.

## Revendications

1. Procédé de transmission de données, le procédé consistant à :
recevoir un paquet Ethernet (1101), le paquet Ethernet transportant un premier bit de contrôle d'en-tête de paquet et le premier bit de contrôle d'en-tête de paquet étant utilisé pour réaliser un contrôle sur une information de transfert du paquet Ethernet, le premier bit de contrôle d'en-tête de paquet étant situé dans un en-tête du paquet Ethernet, l'information de transfert du paquet Ethernet comprenant : une adresse de contrôle d'accès au support (MAC) de destination du paquet Ethernet, le paquet Ethernet transportant des données CPRI, le paquet Ethernet transportant un second bit de contrôle d'en-tête de paquet, le second bit de contrôle d'en-tête de paquet étant utilisé pour réaliser un contrôle sur une information de transfert des données CPRI ;
réaliser un contrôle sur l'information de transfert du paquet Ethernet sur la base du premier bit de contrôle d'en-tête de paquet (1102) ;
déterminer un comportement de transfert du paquet Ethernet sur la base d'un résultat de contrôle de l'information de transfert du paquet Ethernet (1103) ;
réaliser un contrôle sur l'information de transfert des données CPRI sur la base du second bit de contrôle d'en-tête de paquet ; et
déterminer un comportement de transfert des données CPRI sur la base d'un résultat de contrôle de l'information de transfert des données CPRI.

2. Procédé selon la revendication 1, dans lequel la détermination d'un comportement de transfert du paquet Ethernet sur la base d'un résultat de contrôle de l'information de transfert du paquet Ethernet consiste à :
quand le résultat de contrôle de l'information de transfert du paquet Ethernet est correct, transférer le paquet Ethernet ; ou
quand le résultat de contrôle de l'information de transfert du paquet Ethernet est incorrect, ignorer le transfert du paquet Ethernet.

3. Procédé selon la revendication 1, le procédé consistant en outre, quand le paquet Ethernet transporte en outre au moins une étiquette de commutation multiprotocole par étiquette (MPLS), à :
réaliser un contrôle sur au moins une étiquette dans l'étiquette MPLS sur la base du second bit de contrôle d'en-tête de paquet ; et
déterminer le comportement de transfert du paquet Ethernet sur la base d'un résultat de contrôle de l'étiquette MPLS.

4. Procédé selon la revendication 2, le procédé consistant en outre, quand le résultat de contrôle de l'information de transfert du paquet Ethernet est correct, à :
réaliser un contrôle sur chaque bit du paquet Ethernet sur la base d'un bit de contrôle de séquence de contrôle de trame (FCS) ou réaliser un contrôle sur une charge utile du paquet Ethernet sur la base d'un bit de contrôle FCS ; et
quand un résultat de contrôle de chaque bit ou de la charge utile est correct, transférer le paquet Ethernet.

5. Dispositif, le dispositif comprenant :
un module de réception (1201), configuré pour recevoir un paquet Ethernet, le paquet Ethernet transportant un premier bit de contrôle d'en-tête de paquet et le premier bit de contrôle d'en-tête de paquet étant utilisé pour réaliser un contrôle sur une information de transfert du paquet Ethernet, le premier bit de contrôle d'en-tête de paquet étant situé dans un en-tête du paquet Ethernet, l'information de transfert du paquet Ethernet comprenant : une adresse de contrôle d'accès au support (MAC) de destination du paquet Ethernet, le paquet Ethernet transportant des données CPRI, le paquet Ethernet transportant un second bit de contrôle d'en-tête de paquet, le second bit de contrôle d'en-tête de paquet étant utilisé pour réaliser un contrôle sur une information de transfert des données CPRI ;
un module de contrôle (1202), configuré pour réaliser un contrôle sur l'information de transfert du paquet Ethernet sur la base du premier bit de contrôle d'en-tête de paquet et réaliser un contrôle sur l'information de transfert des données CPRI sur la base du second bit de contrôle d'en-tête de paquet ; et
un module de transfert (1203), configuré pour déterminer un comportement de transfert du paquet Ethernet sur la base d'un résultat de contrôle de l'information de transfert du paquet Ethernet, déterminer un comportement de transfert des données CPRI sur la base d'un résultat de contrôle de l'information de transfert des données CPRI.

6. Dispositif selon la revendication 5, dans lequel le module de transfert est configuré pour :
quand le résultat de contrôle de l'information de transfert du paquet Ethernet est correct, transférer le paquet Ethernet ; ou
quand le résultat de contrôle de l'information de transfert du paquet Ethernet est incorrect, ignorer le transfert du paquet Ethernet.

7. Dispositif selon la revendication 5, dans lequel le module de contrôle est en outre configuré pour :
quand le paquet Ethernet transporte en outre au moins une étiquette de commutation multiprotocole par étiquette (MPLS), réaliser un contrôle sur au moins une étiquette dans l'étiquette MPLS sur la base du second bit de contrôle d'en-tête de paquet ; et
le module de transfert est en outre configuré pour déterminer le comportement de transfert du paquet Ethernet sur la base d'un résultat de contrôle de l'étiquette MPLS.

8. Dispositif selon la revendication 6, dans lequel le module de contrôle est en outre configuré pour :
quand le résultat de contrôle de l'information de transfert du paquet Ethernet est correct, réaliser un contrôle sur chaque bit du paquet Ethernet sur la base d'un bit de contrôle de séquence de contrôle de trame (FCS) ou réaliser un contrôle sur une charge utile du paquet Ethernet sur la base d'un bit de contrôle FCS ; et
le module de transfert est en outre configuré pour : quand un résultat de contrôle de chaque bit ou de la charge utile est correct, transférer le paquet Ethernet.

9. Système, le système comprenant un premier dispositif (100), un troisième dispositif (300) et au moins un deuxième dispositif (200) ;
le premier dispositif étant configuré pour : recevoir des données d'interface radio publique commune (CPRI), encapsuler les données CPRI dans un paquet Ethernet et ajouter un premier bit de contrôle d'en-tête de paquet au paquet Ethernet, le premier bit de contrôle d'en-tête de paquet étant utilisé pour réaliser un contrôle sur une information de transfert du paquet Ethernet, le paquet Ethernet transportant un second bit de contrôle d'en-tête de paquet, et le second bit de contrôle d'en-tête de paquet étant utilisé pour réaliser un contrôle sur l'information de transfert des données CPRI ; et envoyer le paquet Ethernet ;
le deuxième dispositif étant configuré pour : recevoir le paquet Ethernet et réaliser un contrôle sur l'information de transfert du paquet Ethernet sur la base du premier bit de contrôle d'en-tête de paquet ; et transférer le paquet Ethernet sur la base d'un résultat de contrôle de l'information de transfert du paquet Ethernet, réaliser un contrôle sur une information de transfert des données CPRI sur la base du second bit de contrôle d'en-tête de paquet et déterminer un comportement de transfert des données CPRI sur la base d'un résultat de contrôle de l'information de transfert des données CPRI ; et le troisième dispositif étant configuré pour : recevoir le paquet Ethernet et réaliser un contrôle sur l'information de transfert du paquet Ethernet sur la base du premier bit de contrôle d'en-tête de paquet ; désencapsuler les données CPRI du paquet Ethernet sur la base d'un résultat de contrôle de l'information de transfert du paquet Ethernet ; et envoyer les données CPRI.
